Europäisches Patentamt

European Patent Office

Office européen des brevets

(19)

(11) Publication number : **0 377 738 B1**

# EUROPEAN PATENT SPECIFICATION

(12)

(45) Date of publication of patent specification :
23.11.94 Bulletin 94/47

(51) Int. Cl.⁵ : **G01N 31/16**

(21) Application number : **88906131.3**

(22) Date of filing : **26.07.88**

(86) International application number :
**PCT/JP88/00747**

(87) International publication number :
**WO 89/01150 09.02.89 Gazette 89/04**

(54) **METHOD FOR DETERMINING CHLORIDE.**

(30) Priority : **27.07.87 JP 185375/87**

(43) Date of publication of application :
**18.07.90 Bulletin 90/29**

(45) Publication of the grant of the patent :
**23.11.94 Bulletin 94/47**

(84) Designated Contracting States :
**BE CH DE FR GB IT LI NL SE**

(56) References cited :
US-A- 3 447 904
US-A- 4 163 039
PATENT ABSTRACTS OF JAPAN, vol. 9, no.
180, page 65 C 293; & JP-A-60 49 073
I.M. Kolthoff, P.J. Elving auther "Treatise on
Analytical Chemistry" Part II Vol. 7 (1961)
John Willy & Sons, Inc. (U.S.A.) P. 54-55
I.M. Kolthoff, P.J. Elving auther "Treatise on
Analytical Chemistry" Part II Vol. 7 (1961)
John Willy & Sons, Inc. (U.S.A.) p. 363-364

(73) Proprietor : **TERUMO KABUSHIKI KAISHA
No. 44-1, Hatagaya 2-chome,
Shibuya-ku
Tokyo 151 (JP)**

(72) Inventor : **MORIKAWA, Naoki Terumo
Kabushiki Kaisha
1500, Inokuchi, Nakai-cho
Ashigarakami-gun KANAGAWA-KEN (JP)**
Inventor : **SUZUKI, Hiroshi Terumo Kabushiki
Kaisha
1500, Inokuchi, Nakai-cho
Ashigarakami-gun KANAGAWA-KEN (JP)**

(74) Representative : **Gillard, Marie-Louise et al
Cabinet Beau de Loménie
158, rue de l'Université
F-75340 Paris Cédex 07 (FR)**

## Description

Technical Field

This invention relates to a method for the quantitative determination of chlorides. Particularly, it is concerned with a method for detecting and quantitatively determining chlorides in samples including specimens such as plasma, transfusions and urine.

Background Art

One of the known methods for the quantitative determination of chlorides or chloride ions is the Volhard method, according to which a predetermined excess amount of silver nitrate is added to a sample solution containing chloride ions to form white precipitates of silver chloride, which is separated by filtration, and the excess silver ions remaining in the filtrate is titrated with a thiocyanate solution using $Fe^{3+}$ as an indicator. Concentration of the chlorides or chloride ions is calculated from the amount of the silver nitrate and that of the thiocyanate consumed, wherein the point at which ferric thiocyanate (ferric rhodanate) formed after the consumption of the silver develops a color (yellow - red) is set as the end point of the titration.

In this method, if a specimen is in a color range of yellowish brown to red, the above-mentioned change to a red color was not clear enough to detect the end point of titration.

Disclosure of the Invention

It is an object of the present invention to provide a method for quantitatively determining chlorides in a sample with accuracy even if the test material is in a color range of yellowish brown to red, wherein the end point of titration is made distinct, thus solving the prior art problems.

According to the invention there is provided a method for the quantitative determination of chlorides as set forth below.

1) A method for the quantitative determination of chlorides which comprises adding an excess amount of a water-soluble silver salt to a chloride-containing specimen, filtering off precipitates of the silver chloride thus formed and titrating the silver in the filtrate with an aqueous solution of a thiocyanate in the presence of a titration indicator, characterized by using a cobalt compound as a titration indicator and a color sensitizer.

2) A method according to item 1 wherein the cobalt compound is cobalt(II) nitrate.

3) A method according to item 1 wherein said water-soluble silver salt is a strong electrolyte.

4) A method according to item 3 wherein said strongly electrolytic water-soluble silver salt is silver nitrate.

5) A method according to item 1 or 2 wherein the color sensitizer is a quaternary ammonium salt, methanol, ethanol, acetone, polyvinyl pyrrolidone or a phosphate compound.

6) A method according to item 3 wherein the quaternary ammonium salt is tetrabutylammonium nitrate.

7) A method according to item 5 wherein the phosphate compound is tributyl phosphate.

As a chloride-containing specimen used in the invention are mentioned, for example, plasma, plasma substitutions, amino acid and/or vitamin-containing transfusions, beverages such as fruit juice, wine and beer, solutions of a solid food, urine and other test materials.

The method of the present invention is effective especially for specimens such as vitamin $B_1$ or like substance-containing transfusions and urine with which the color reaction was hardly detectable by prior-art methods such as the Volhard method.

As examples of the chloride contained in these liquid specimens are mentioned sodium chloride, potassium chloride, magnesium chloride, calcium chloride and the like.

Measurement of these chlorides is usually carried out for the assay of components of various pharmaceutical preparations.

In carrying out the present invention, first, a predetermined excess amount of a water-soluble silver salt is added to a sample solution to form white precipitates of silver chloride, which are then filtered off.

To the filtrate are added $Co^{2+}$ as a color indicator and a color sensitizer, and then, a thiocyanate solution is added thereto until reaching the end point of titration when color of the solution is changed from pink to blue.

The water-soluble silver salt includes silver nitrate, silver acetate, silver malonate, silver perchlorate and the like, silver nitrate being most preferable.

Cobalt(II) nitrate is a suitable $Co^{2+}$-providing cobalt compound, which is used in the form of an aqueous solution in a concentration of usually 0.1-1.0%, and preferably 0.2-0.6%.

The present invention is characterized by using a color sensitizer together with a cobalt compound as a titration indicator. As the color sensitizer are mentioned quaternary ammonium salts, methanol, ethanol, acetone, polyvinyl pyrrolidone and phosphate compounds. The quaternary ammonium salts include aliphatic quaternary ammonium salts such as tetraalkyl ammonium salts containing four or more carbon atoms, for example, tetrabutylammonium nitrate, tetrabutylammonium perchlorate and tetrabutylammonium borofluoride. Aromatic quaternary ammonium salts and heterocyclic quaternary ammonium salts may also be used. The phosphate compounds include triethyl phosphate, tributyl phosphate, trioctyl phosphate, tributoxyethyl phosphate and the like.

Such color sensitizer is used in the form of an aqueous solution desirably in an amount so as to provide a molar concentration equal to that of $Co^{2+}$ ion.

The thiocyanate used for the titration of silver in the present invention may be, for example, ammonium thiocyanate, potassium thiocyanate, sodium thiocyanate and the like.

Silver ions remaining in the filtrate after filtration of the silver-chloride precipitates are precipitated with an aqueous solution of the above-mentioned thiocyanate to form white precipitates of silver thiocyanate. After the silver ions have entirely been consumed, excess $SCN^-$ and $Co^{2+}$ of the color indicator are reacted to form cobalt thiocyanate, which in turn forms a complex with the color sensitizer and develops a blue color.

Concentration of the chlorides can be calculated from respective amounts of the aqueous solutions of silver nitrate and thiocyanate dropped.

The invention will be described below in more detail with reference to an example and a comparative example.

Example 1

To 10 ml of a specimen was added 0.4 ml of concentrated nitric acid. To the mixture was dropwise added an aqueous solution (0.1 N) of silver nitrate to precipitate all of the chloride ions as silver chloride. The silver chloride precipitates were filtered off. To a 5-ml aliquote of the filtrate were added 150 mg of tetrabutylammonium nitrate and 10 mg of cobalt(II) nitrate (hexahydrate). Excess silver ions were back titrated with a standard solution of ammonium thiocyanate (0.05 N). The area to which the solution has been dropwise added turns blue, but the color desappears when stirred. It is set as the end point when the blue-colored precipitates no longer disappear as it is stirred.

NaCl concentration (%) in the specimens was calculated from the dropped amount of the aqueous solution of silver nitrate a (ml) and the dropped amount of the standard solution of ammonium thiocyanate b (ml) using the following equation.

$$[10a - b(a + 10.4)] \times 5.85 \times 10^{-3} \ (\%)$$

The results were as follows.

| a (ml) | b (ml) | NaCl concentration (%) |
|---|---|---|
| 8.87 | 0.09 | 0.508 |
| 17.38 | 0.08 | 1.004 |
| 34.41 | 0.27 | 1.942 |

Comparative Example 1

A similar experiment was made using a wine as specimen and ferric ions ($Fe^{3+}$). As color of the wine and the color changed at the end point of titration were similar, determination of the end point was difficult. When $Co^{2+}$ and a sensitizer were used together, the color change area was differentiated to allow the easy determination of the end point.

Industrial Applicability

According to the present invention, there is provided a method for the quantitative determination of chlorides or chloride ions in chloride-containing specimens.

In the method of the invention, use of $Co^{2+}$ as a titration indicator in place of the $Fe^{3+}$ in the prior Volhard method together with a color sensitizer allows to give a blue coloration. Consequently, when the the quantitative determination is conducted with a specimen having a color range of yellowish brown to red, the end point of titration can more easily be determined than in the prior art methods wherein change from a yellow color to a red color is judged. The quantitative assay of the present invention is used for the quantitative determination of chlorides in plasma, plasma substitutions, amino acid- and/or vitamin-containing transfusions, beverages such as fruit juice, wine and beer, solutions of a solid food, urine and other test materials. Therefore, the invention is utilizable in the fields of medical industry and food industry.

## Claims

1. A method for the quantitative determination of chlorides which comprises adding an excess amount of a water-soluble silver salt to a chloride-containing specimen, filtering off precipitates of the silver chloride thus formed and titrating the silver in the filtrate with an aqueous solution of a thiocyanate in the presence of a titration indicator, characterized by using a cobalt compound as a titration indicator and a color sensitizer.

2. A method according to Claim 1 wherein the cobalt compound is cobalt(II) nitrate.

3. A method according to Claim 1 wherein said water-soluble silver salt is a strong electrolyte.

4. A method according to Claim 3 wherein said strongly electrolytic water-soluble silver salt is silver nitrate.

5. A method according to Claim 1 or 2 wherein the color sensitizer is a quaternary ammonium salt, methanol, ethanol, acetone, polyvinyl pyrrolidone or a phosphate compound.

6. A method according to Claim 3 wherein the quaternary ammonium salt is tetrabutylammonium nitrate.

7. A method according to Claim 3 wherein the phosphate compound is tributyl phosphate.

## Patentansprüche

1. Verfahren zur quantitativen Bestimmung von Chloriden durch Zugeben eines Überschusses eines wasserlöslichen Silbersalzes zu einem Chlorid enthaltenden Prüfling, Abfiltrieren des so gebildeten Silberchloridniederschlags und Tibrieren des Silbers im Filtrat mit einer wäßrigen Lösung eines Thiocyanats in Gegenwart eines Titrationsindiktators, dadurch gekennzeichnet, daß eine Kobaltverbindung als Titrationsindikator und ein Farbsensibilisator mitverwendet werden.

2. Verfahren nach Anspruch 1, wobei die Kobaltverbindung aus Kobalt(II)-nitrat besteht.

3. Verfahren nach Anspruch 1, wobei das wasserlösliche Silbersalz aus einem starken Elektrolyten besteht.

4. Verfahren nach Anspruch 3, wobei das stark elektrolytische wasserlösliche Silbersalz aus Silbernitrat besteht.

5. Verfahren nach Anspruch 1 oder 2, wobei der Farbsensibilisator aus einem quarternären Ammoniumsalz, Methanol, Ethanol, Aceton, Polyvinylpyrrolidon oder einer Phosphatverbindung besteht.

6. Verfahren nach Anspruch 3, wobei das quarternäre Ammoniumsalz aus Tetrabutylammoniumnitrat besteht.

7. Verfahren nach Anspruch 3, wobei die Phosphatverbindung aus Tributylphosphat besteht.

## Revendications

1. Procédé de détermination quantitative de chlorures qui comporte l'addition d'une quantité en excès d'un sel d'argent soluble dans l'eau à un échantillon contenant du chlorure, la séparation par filtration des précipités de chlorure d'argent ainsi formés et la titration de l'argent dans le filtrat par une solution aqueuse d'un thiocyanate en présence d'un indicateur de titration, caractérisé en ce que l'on utilise un composé à base de cobalt en tant qu'indicateur de titration et un agent de sensibilisation à la couleur.

2. Procédé selon la revendication 1, dans lequel le composé à base de cobalt est le nitrate de cobalt-II.

3. Procédé selon la revendication 1, dans lequel ledit sel d'argent soluble dans l'eau est un électrolyte fort.

4. Procédé selon la revendication 3, dans lequel ledit sel d'argent électrolyte fort soluble dans l'eau est le nitrate d'argent.

5. Procédé selon l'une des revendications 1 ou 2, dans lequel l'agent de sensibilisation à la couleur est un sel d'ammonium quaternaire, le méthanol, l'éthanol, l'acétone, la polyvinylpyrrolidone ou un composé phosphate.

6. Procédé selon la revendication 3, dans lequel le sel d'ammonium quaternaire est le nitrate de tétrabutylammonium.

7. Procédé selon la revendication 3, dans lequel le composé phosphate est le phosphate de tributyle.